# EUROPÄISCHE PATENTSCHRIFT

(11) **EP 2 563 610 B1**
(45) Veröffentlichungstag und Bekanntmachung des Hinweises auf die Patenterteilung: **21.05.2014**
(21) Anmeldenummer: 11717217.1
(22) Anmeldetag: 20.04.2011
(51) Int. Cl.: B60K 1/04, B62D 21/15, B62D 25/20

(54) **HALTEANORDNUNG EINER BATTERIEEINHEIT AN EINER KAROSSERIE EINES PERSONENKRAFTWAGENS**
BATTERY UNIT SUPPORT ARRANGEMENT ON THE BODY OF A PASSENGER VEHICLE
ENSEMBLE SUPPORT POUR UNE UNITÉ BATTERIE SUR LA CARROSSERIE D'UNE AUTOMOBILE

(30) Priorität: 29.04.2010 DE 102010018725
(43) Veröffentlichungstag der Anmeldung: 06.03.2013
(73) Patentinhaber: Bayerische Motoren Werke Aktiengesellschaft, 80809 München (DE)
(72) Erfinder: BRANDT, Claus, 81547 Muenchen (DE)
(74) Vertreter: Schernhammer, Herbert
(86) Internationale Anmeldenummer: PCT/EP2011/056353
(87) Internationale Veröffentlichungsnummer: WO 2011/134871

(56) Entgegenhaltungen:
- JP-A- 7 117 489
- JP-A- 2008 100 585
- JP-A- 2009 083 598
- US-A1- 2007 215 399

## Beschreibung

Die Erfindung betrifft eine Halteanordnung einer Batterieeinheit an einer Karosserie eines Personenkraftwagens nach dem Oberbegriff von Patentanspruch 1.

Batterien für elektrisch betriebene Kraftwagen besitzen eine hohe Masse und müssen daher besonders stabil an der Karosserie eines solchen Kraftwagens gehalten werden. Insbesondere bei einer unfallbedingten Kraftbeaufschlagung stellen derartige Batterien aufgrund ihrer hohen Massenträgheit eine Gefahr dar. Zum einen entwickeln sich an den Haltepunkten der Batterien durch die Kombination aus hohen unfallbedingten Beschleunigungen und der hohen Massenträgheit besonders große Kräfte, denen die Halteanordnung widerstehen muss. Zum anderen droht aufgrund der hohen Masse der Batterien eine Intrusion der Batterien in den Bereich einer Fahrgastzelle der Karosserie eines solchen Kraftwagens, welche vermieden werden muss, um die Insassen nicht zu gefährden. Gleichzeitig dürfen die Batterien selbst nur minimal beschädigt werden, da bei einer Beschädigung die hohen gespeicherten Energiemengen schlagartig freigesetzt werden könnten, wodurch sowohl Feuergefahr als auch die Gefahr elektrischer Entladungen zum Schaden der Fahrzeuginsassen besteht.

Aus der EP 0 566 840 A1 ist eine Halteanordnung einer Batterieeinheit bekannt. Die Batterieeinheit ist im Heckbereich des Kraftwagens angeordnet und an einem im Wesentlichen formstabilen Heckende des hinteren Fahrzeugbereichs befestigt. Relativ zu den übrigen Teilen des Fahrzeugs ist die Batterieeinheit in Fahrzeuglängsrichtung nachgiebig gelagert. Bei einem Frontalzusammenstoß auftretende Aufprallenergie soll über das formstabile Heckende in heckseitig angeordnete längs verformbare Deformationselemente des hinteren Fahrzeugbereichs eingeleitet werden und dort in Verformungsarbeit umgesetzt werden.

Eine solche Halteanordnung vermag einen Teil der unfallbedingt eingebrachten Energie zu absorbieren, ermöglicht jedoch eine Bewegung der Batterie in Fahrzeuglängsrichtung. Ab einer bestimmten Unfallschwere besteht daher auch hier die Gefahr der Intrusion der Batterie in die Fahrgastzelle, was zu den beschriebenen Folgen führen kann.

Weiterhin ist aus der JP-2009-083598 A eine gattungsgemäße Halteeinrichtung für eine Batterieeinheit eines Kraftfahrzeugs bekannt, die über eine Vielzahl von Verschraubungen mit der Tragstruktur des Kraftfahrzeugs verbunden ist und somit die Batterieeinheit großflächig mit dem Kraftfahrzeug verbindet.

Es ist Aufgabe der Erfindung, eine Halteanordnung nach dem Oberbegriff von Patentanspruch 1 bereitzustellen, durch welche eine übermäßige unfallbedingte Verlagerung oder Beschädigung der Batterieeinheit und eine Intrusion der Batterieeinheit in eine Fahrgastzelle eines Kraftwagens vermieden werden kann.

Diese Aufgabe wird erfindungsgemäß durch eine Halteanordnung mit den Merkmalen des Patentanspruchs 1 gelöst. Vorteilhafte Ausführungen der Erfindung sind Gegenstand der abhängigen Patentansprüche und der Beschreibung.

Eine erfindungsgemäße Halteanordnung einer Batterieeinheit an einer Karosserie eines Personenkraftwagens umfasst eine Rahmenstruktur, mittels welcher die Batterieeinheit an einem korrespondierenden Strukturbereich der Karosserie gehalten ist. Zumindest ein Teil der Batterieeinheit ist in einer deformierbaren Zone der Karosserie angeordnet. Die Rahmenstruktur der Halteanordnung umfasst wenigstens ein Halteelement, über welches der in der deformierbaren Zone der Karosserie angeordnete Teil der Batterieeinheit an einem deformationsstabilen Strukturbereich der Karosserie verankert ist. Erfindungsgemäß ist vorgesehen, dass der deformationsstabile Strukturbereich in einer deformationssteifen Zone der Karosserie angeordnet ist.

Im Gegensatz zu bekannten Halteanordnungen ist also nicht lediglich der unmittelbare Verankerungsbereich der Batterieeinheit deformationssteif ausgebildet, sondern die gesamte Zone der Karosserie, in welcher dieser Strukturbereich angeordnet ist. Bei einer unfallbedingten Kraftbeaufschlagung werden die Trägheitskräfte über das Halteelement in den deformationsstabilen Strukturbereich der Karosserie eingeleitet und über weitere Strukturelemente der deformationssteifen Zone aufgenommen, ohne dass dort eine übermäßige Verformung stattfindet. Da innerhalb der deformationssteifen Zone kein Energieabbau durch Crashelemente oder dergleichen stattfindet, vermeidet eine derartige Halteanordnung eine Verlagerung der Batterie in Richtung eines Aufprallhindernisses aufgrund ihrer Trägheit. Damit wird auch eine Intrusion der Batterie in den Bereich einer Fahrgastzelle des Kraftwagens vermieden. Eine derartige Halteanordnung bietet daher eine besonders hohe Crashsicherheit und vermeidet Verletzungsrisiken für Fahrzeuginsassen sowohl durch eine Bewegung der Batterie als auch durch eine Beschädigung der Batterie.

Erfindungsgemäß ist die Rahmenstruktur mittels wenigstens einer Zugstrebe an einem Fersenblech der Karosserie verankert. Das Fersenblech ist eine Struktur am hinteren Ende der Fahrgastzelle im Übergang zum Heckboden. Der Ankerpunkt der Batterieeinheit genießt also den Deformationsschutz, den die Fahrgastzelle bietet. Eine Verankerung am Fersenblech kann dabei sowohl bezüglich von Zugkräften in Fahrzeuglängsrichtung nach vorne als auch in Fahrzeuglängsrichtung nach hinten realisiert werden, so dass sowohl im Tunnel aufgenommene Batterieeinheiten als auch im Bereich des Fahrzeughecks aufgenommene Batterieeinheiten am Fersenblech gestützt werden können. Als im Rahmen der Erfindung mit umfasst ist es dabei zu betrachten, dass in entsprechender Konstellation auch Druckstreben eingesetzt werden könnten, um die Batterieeinheit im Bereich der deformationssteifen Zone abzustützen.

Vorzugsweise ist das Fersenblech in einem Anbindungsbereich der wenigstens einen Zugstrebe durch eine Blechdoppelung verstärkt. Damit können besonders hohe Kräfte ins Fersenblech eingeleitet werden. Am Fersenblech können diese Kräfte dann auf andere tragende Strukturen der Karosserie abgeleitet und sowohl an der Batterieeinheit als auch an der Fahrgastzelle der Karosserie vorbeigeleitet werden. In einer bevorzugten Ausführungsform der Erfindung ist die Batterieeinheit als Batteriekasten mit wenigstens einem batteriekastenfesten umlaufenden Gurt ausgebildet. Der Batteriekasten schützt die in ihm aufgenommenen Batterien zusätzlich vor mechanischer Beschädigung. Der umlaufende Gurt verstärkt den Batteriekasten, so dass dieser sich auch unter hohen unfallbedingt eingeleiteten Kräften bzw. unter seiner eigenen Massenträgheit im Falle eines Unfalls nicht wesentlich verformt.

Bevorzugt ist der wenigstens eine Gurt so angeordnet, dass er den Batteriekasten in etwa auf Höhe eines Massenschwerpunktes des Batteriekastens umläuft. Dies ermöglicht eine besonders gute Stabilisierung des Batteriekastens gegenüber durch Kraftbeaufschlagung verursachte Verformungen.

In einer bevorzugten Ausführungsform ist die Batterieeinheit in einem Mitteltunnel des Personenkraftwagens angeordnet. Dies nutzt den zur Verfügung stehenden Bauraum besonders gut aus, da bei einem Kraftwagen mit elektrischem Antrieb der Mitteltunnel nicht für Antriebs- und Abgasstrang genutzt werden muss. Gleichzeitig genießt die Batterieeinheit den Deformationsschutz der Fahrgastzelle, so dass das Risiko einer Beschädigung der Batterieeinheit bei einer derartigen Anordnung minimal ist. Bei einer derart ausgeführten Halteanordnung beansprucht bei einem Frontalaufprall die Batterieeinheit über das Halteelement das Fersenblech auf Zug, da sich die Batterieeinheit bei einer derartigen Aufprallsituation aufgrund ihrer Massenträgheit in Fahrzeuglängsrichtung nach vorne zu verlagern versucht.

Vorzugsweise ist die Rahmenstruktur in einem der Fahrzeugfront zugewandten Bereich des Mitteltunnels über Befestigungselemente zur Aufnahme von im Wesentlichen in Fahrzeughochrichtung wirkenden Betriebslasten mit korrespondierenden Strukturelementen des Mitteltunnels verbunden. Diese Befestigungselemente tragen nicht zur Abstützung von unfallbedingt wirkenden Kräften bei, sondern halten die Batterie lediglich im normalen Fahrbetrieb, so dass die Batterieeinheit keine Hebelwirkung auf das Fersenblech ausübt. Gleichzeitig wird das Fersenblech von den im Normalbetrieb auftretenden, im Wesentlichen in Hochrichtung wirkenden Wechsellasten entlastet, so dass dort weniger Materialermüdung auftritt. Die Verankerung am Fersenblech ist daher im Falle eines Unfalls besonders sicher.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar.

Die Erfindung wird nun anhand eines bevorzugten Ausführungsbeispiels sowie unter Bezugnahme auf die Zeichnungen näher erläutert. Es zeigen:
- Fig. 1: eine schematische Darstellung der Einbaulage von Batteriekästen und Antriebsaggregat in einem elektrischen Kraftwagen;

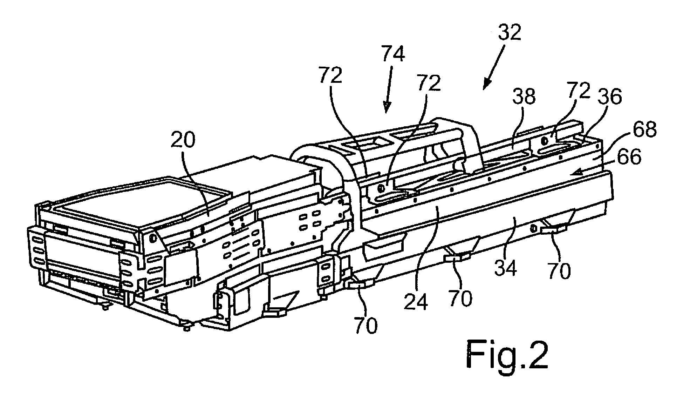

- Fig. 2: eine Batterieeinheit mit einer Rahmenstruktur für ein Ausführungsbeispiel einer erfindungsgemäßen Halteanordnung;
- Fig. 3: eine angeschnittene Detailansicht der Batterieeinheit gemäß Fig. 2;

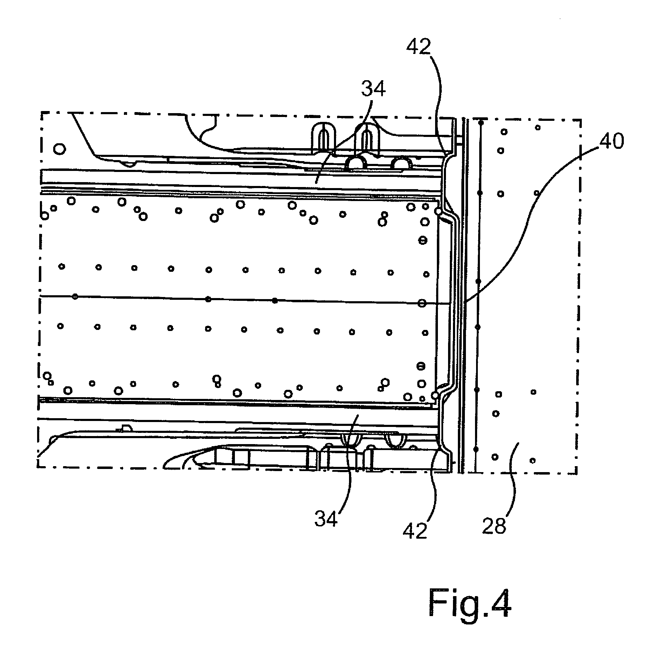

- Fig. 4: eine angeschnittene, von einer Fahrzeugunterseite her betrachtete Darstellung eines Ausführungsbeispiels einer erfindungsgemäßen Halteanordnung; und
- Fig. 5: eine angeschnittene, von einer Fahrzeugseite her betrachtete Darstellung eines Ausführungsbeispiels einer erfindungsgemäßen Halteanordnung.

In einem im Ganzen mit 10 bezeichneten elektrisch angetriebenen Kraftwagen befindet sich das Antriebsaggregat 12 nicht wie bei konventionell angetriebenen Fahrzeugen im Motorraum 14, sondern ist oberhalb einer Hinterachse 16 angeordnet. Das elektrische Antriebsaggregat 12 bildet ein Modul zusammen mit einer Leistungselektronik 18 zur Versorgung des Aggregats 12 mit Energie.

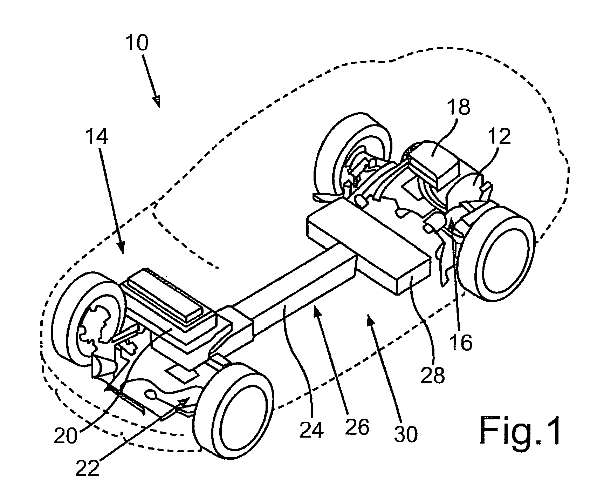

Zur Speicherung der elektrischen Antriebsenergie sind drei Batterieeinheiten vorgesehen. Eine erste Batterieeinheit 20 ist im Motorraum 14 oberhalb einer Vorderachse 22 angeordnet. Eine zweite Batterieeinheit 24 erstreckt sich durch einen Mitteltunnel 26 des Kraftwagens 10 und eine dritte Batterieeinheit 28 ist im Heckbereich zwischen dem Mitteltunnel 26 und dem Antriebsaggregat 12 angeordnet. Zwischen den Batterieeinheiten 24 und 28 erstreckt sich ein in Fig. 1 nicht dargestelltes Fersenblech, welches den Übergang vom Boden der Fahrgastzelle 30 zum Heckboden bildet.

Die Batterieeinheiten 20, 24, 28 besitzen eine große Masse und müssen daher stabil abgestützt werden. Dies ist insbesondere im Falle eines Unfalls notwendig. Bei einem Frontalaufprall besitzen die Batterieeinheiten 20, 24, 28 aufgrund ihrer hohen Massenträgheit eine Tendenz, sich in Fahrzeuglängsrichtung nach vorne zu verlagern. Eine solche Verlagerung muss vermieden werden, um eine Beschädigung der Fahrgastzelle 30 sowie eine Beschädigung der Batterieeinheiten 20, 24, 28 selbst zu verhindern. Aufgrund der hohen in den Batterieeinheiten 20, 24, 28 gespeicherten Energiemenge besteht bei einer Beschädigung der Batterieeinheiten 20, 24, 28 die Gefahr einer plötzlichen Entladung unter Funkenschlag oder Entflammung, die die Sicherheit der Fahrzeuginsassen gefährden könnten.

Zur stabilen Befestigung der Batterieeinheit 24 im Mitteltunnel 26 ist ein Halterahmen 32 vorgesehen, der karosseriefest angeordnet ist und die Batterieeinheit 24 einschließt. Über seitliche Zugstreben 34 sowie eine weitere auf der Oberseite 36 der Batterieeinheit 24 angeordnete Zugstrebe 38 ist die Batterieeinheit 24 am Fersenblech 40 der Karosserie des Kraftwagens 10 gehalten. Das Fersenblech 40 ist selbst deformationsstabil und liegt im Heckbereich der Fahrgastzelle 30, also in einer deformationssteifen Zone der Karosserie.

Im Falle eines Unfalls wird also eine Deformation des Fersenblechs 40 sowohl durch die Massenträgheit der Batterieeinheit 24 als auch durch anderweitig unfallbedingte Krafteinwirkungen vermieden. Die seitlichen Zugstreben 34 sind dabei über Blechdoppelungen 42, die das Fersenblech 40 lokal verstärken, am Fersenblech 40 angebunden. Im Anbindungsbereich der seitlichen Zugstreben 34 weist das Fersenblech 40 somit eine lokale Hohlprofilstruktur mit Hohlräumen 44 auf.

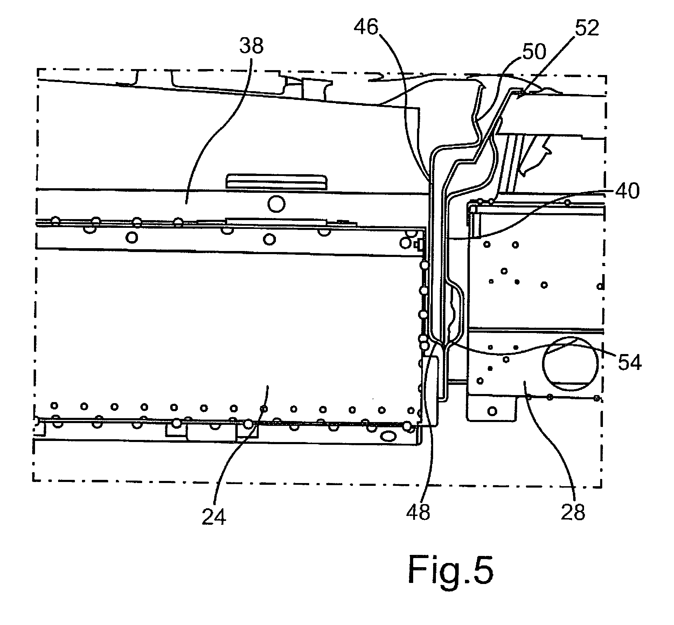

Wie Fig. 5 zeigt, liegt auch im Anbindungsbereich der oberen Zugstrebe 38 eine Blechdoppelung vor. Die obere Zugstrebe 38 ist an einem Verstärkungsblech 46 angebunden, welches mit einem ersten Flanschbereich 48 an einem fahrzeugunterseitigen Ende des Fersenblechs 40 befestigt ist und mit einem zweiten Flanschbereich 50 mit einer Heckbodenstruktur 52 des Kraftwagens 10 in Verbindung steht. In Richtung zum Fahrzeugheck ist im Bereich des Flanschs 48 des Verstärkungsblechs 46 ein zweites Verstärkungsblech 54 mit dem Fersenblech 40 verbunden. Diese Verstärkung bietet der hinteren Batterieeinheit 28 eine zusätzliche Abstützung.

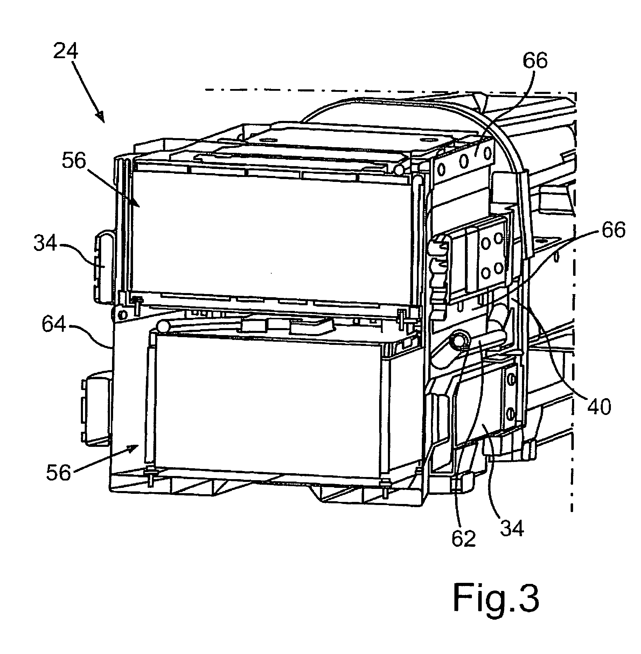

Wie in der angeschnittenen Darstellung in Fig. 3 zu erkennen ist, nimmt die Batterieeinheit 24 zwei übereinander gelagerte, schematisch angedeutete Reihen von Batteriemodulen 56 auf, die wiederum eine Mehrzahl von Einzelbatterien aufnehmen können. Über Kühlmittelleitungen 62 kann der Batterieeinheit 24 Wasser zur Kühlung der Batterien 58 zugeführt werden. Das Gehäuse 64 der Batterieeinheit 24 weist Gurte 66 auf, die das Gehäuse 64 umlaufen. Die Gurte 66 bieten einen zusätzlichen Schutz gegen Verformungen des Gehäuses 64 der Batterieeinheit 24.

Mit der Außenwandung 68 des Gehäuses 66 der Batterieeinheit 24 sind die seitlichen Zugstreben 34 über Anbindungsflansche 70 verbunden, insbesondere verschraubt. Über Flansche 72 auf der Oberseite 36 der Batterieeinheit 24 ist die obere Zugstrebe 38 des Rahmens 32 der Batterieeinheit 24 verbunden. Zur Fahrzeugfront hin bildet der Rahmen 32 eine Stützstruktur 74 aus, über welche die Batterieeinheit 24 an Strukturelementen des Tunnels 26 des Kraftwagens 10 befestigt werden kann. Diese Befestigung dient nicht der Stabilisierung gegenüber unfallbedingten Kraftbeaufschlagungen, sondern soll lediglich die im Wesentlichen in Fahrzeughochrichtung wirkenden Betriebslasten beim Betrieb des Kraftwagens 10 abstützen. Die gezeigte Halteanordnung ermöglicht also eine separate Optimierung der Befestigung der Batterieeinheit 24 im Hinblick auf betriebsbedingte Belastungen im Fahrbetrieb und im Hinblick auf unfallbedingte Krafteinwirkungen.

Obwohl sich Bereiche der Batterieeinheit 24 in deformierbaren Zonen des Kraftwagens befinden, wird durch die Halterung der Batterieeinheit über die Zugstreben 34, 38 am deformationssteifen Fersenblech 40 eine Verlagerung der Batterieeinheit durch unfallbedingte Kräfte wirksam vermieden. Gleichzeitig wird die Batterieeinheit 24 zuverlässig vor mechanischer Beschädigung bei einem Unfall geschützt, so dass Funkenschlag und Entflammung vermieden werden können.

### Bezugszeichenliste

- 10: Kraftwagen
- 12: Antriebsaggregat
- 14: Motorraum
- 16: Hinterachse
- 18: Leistungselektronik
- 20, 24, 28: Batterieeinheiten
- 22: Vorderachse
- 26: Mitteltunnel
- 30: Fahrgastzelle
- 32: Halterahmen
- 34, 38: Zugstreben
- 36: Oberseite
- 40: Fersenblech
- 42: Blechdoppelungen
- 44: Hohlräume
- 46, 54: Verstärkungsbleche
- 48, 50: Flanschbereiche
- 52: Heckbodenstruktur
- 56: Batteriemodule
- 62: Kühlmittelleitung
- 64, 66: Gehäuse
- 68: Außenwandung
- 70: Anbindungsflansche
- 72: Flansche
- 74: Stützstruktur

## Patentansprüche

1. Halteanordnung einer Batterieeinheit (24) an einer Karosserie eines Personenkraftwagens (10), bei welcher zumindest ein Teil der Batterieeinheit (24) in einer deformierbaren Zone (26) der Karosserie angeordnet ist und bei welcher die Batterieeinheit (24) über eine Rahmenstruktur (32) an einem korrespondierenden Strukturbereich (40) der Karosserie gehalten ist, wobei die Rahmenstruktur (32) wenigstens ein Halteelement (34, 38) umfasst, über welches der in der deformierbaren Zone (26) der Karosserie angeordnete Teil der Batterieeinheit (24) an einem deformationsstabilen Strukturbereich (40) der Karosserie verankert ist, **dadurch gekennzeichnet, dass**
der deformationsstabile Strukturbereich (40) in einer deformationssteifen Zone (30) der Karosserie, einem Fersenblech (40), angeordnet ist, wobei die Rahmenstruktur (32) mittels wenigstens einer Zugstrebe (34, 38) an dem Fersenblech (40) der Karosserie verankert ist.

2. Halteanordnung nach Anspruch 1,
**dadurch gekennzeichnet, dass**
das Fersenblech (40) in einem Anbindungsbereich der wenigstens einen Zugstrebe (34, 38) durch eine Blechdoppelung (42, 46) verstärkt ist.

3. Halteanordnung nach Anspruch 1 oder 2,
**dadurch gekennzeichnet, dass**
die Batterieeinheit (24) als Batteriekasten (64) mit wenigstens einem batteriekastenfesten umlaufenden Gurt (66) ausgebildet ist.

4. Halteanordnung nach Anspruch 3,
**dadurch gekennzeichnet, dass**
der wenigstens eine Gurt (66) den Batteriekasten (64) in etwa auf Höhe eines Massenschwerpunktes des Batteriekastens (64) umläuft.

5. Halteanordnung nach einem der vorhergehenden Ansprüche,
**dadurch gekennzeichnet, dass**
die Batterieeinheit (24) in einem Mitteltunnel (26) des Personenkraftwagens (10) angeordnet ist.

6. Halteanordnung nach Anspruch 5,
**dadurch gekennzeichnet, dass**
die Rahmenstruktur (32) in einem der Fahrzeugfront zugewandten Bereich des Mitteltunnels (26) über Befestigungselemente zur Aufnahme von im Wesentlichen in Fahrzeughochrichtung wirkender Betriebslasten mit korrespondierenden Strukturelementen des Mitteltunnels (26) verbunden ist.

## Claims

1. An arrangement for holding or retaining a battery unit (24) on a car body (10), wherein at least a part of the battery unit (24) is disposed in a deformable area (26) of the body and wherein the battery unit (24) is held by a frame structure (32) on a corresponding structural region (40) of the body, the frame structure (32) comprising at least one retaining element (34, 38) by means of which the part of the battery unit (24) disposed in the deformable area (26) of the body is anchored to a non-deformable structural region (40) of the body,
**characterised in that**
the non-deformable structural region (40) (a bottom plate 40) is disposed in a deformation-resistant area (30) of the body, wherein the frame structure (32) is anchored by at least one diagonal tie (34, 38) to the bottom plate (40) of the body.

2. An arrangement according to claim 1,
**characterised in that**
the bottom plate (40) is reinforced by a metal lining (42, 46) at a place where the at least one diagonal tie (34, 38) is attached.

3. An arrangement according to claim 1 or claim 2,
**characterised in that**
the battery unit (24) is a battery case (64) comprising at least one peripheral belt (66) fastened to the battery case.

4. An arrangement according to claim 3,
**characterised in that**
the at least one belt (66) surrounds the battery case (64) about level with a centre of gravity of the battery case (64).

5. An arrangement according to any of the preceding claims,
**characterised in that**
the battery unit (24) is disposed in a central tunnel (26) of the car (10).

6. An arrangement according to claim 5,
**characterised in that**
in a region of the central tunnel (26) facing the front of the vehicle, the frame structure (32) is connected to corresponding structural elements of the central tunnel (26) by fastening elements for receiving loads in operation, acting substantially in the vertical direction of the vehicle.

## Revendications

1. Dispositif de fixation d'une unité de batterie (24) sur la carrosserie d'un véhicule particulier (10) dans lequel au moins une partie de l'unité de batterie (24) est montée dans une zone déformable (26) de la carrosserie et dans lequel l'unité de batterie (24) est maintenue par l'intermédiaire d'une structure de cadre (32) sur une zone de structure correspondante (40) de la carrosserie, la structure de cadre (32) comprenant au moins un élément de maintien (34, 38) par l'intermédiaire duquel la partie de l'unité de batterie (24) montée dans la zone déformable (26) de la carrosserie est ancrée à une zone de structure stable vis-à-vis des déformations (40) de la carrosserie,
**caractérisé en ce que**
la zone de structure stable vis-à-vis des déformations (40) est située dans une zone rigide vis-à-vis des déformations (30) de la carrosserie et comprend une tôle de talon (40), la structure de cadre (32) étant ancrée à la tôle de talon (40) de la carrosserie par au moins un tirant (34, 38).

2. Dispositif de fixation conforme à la revendication 1,
**caractérisé en ce que**
la tôle de talon (40) est renforcée par un doublement de la tôle (42, 46) dans la zone de liaison du tirant (34, 38).

3. Dispositif de fixation conforme à la revendication 1 ou 2,
**caractérisé en ce que**
l'unité de batterie (24) est réalisée sous la forme d'un caisson de batterie (64) comportant au moins une ceinture (66) entourant rigidement le caisson de batterie.

4. Dispositif de fixation conforme à la revendication 3,
**caractérisé en ce que**
la ceinture (66) entoure le caisson de batterie (64) essentiellement au niveau du centre de gravité massique du caisson de batterie (64).

5. Dispositif de fixation conforme à l'une des revendications précédentes,
**caractérisé en ce que**
l'unité de batterie (24) est montée dans un tunnel médian (26) du véhicule particulier (10).

6. Dispositif de fixation conforme à la revendication 5,
**caractérisé en ce que**
la structure de cadre (32) est reliée, dans une zone du tunnel médian (26) tournée vers l'avant du véhicule à des éléments de structure correspondants du tunnel médian (26), par l'intermédiaire d'éléments de fixation pour permettre l'absorption de charges de fonctionnement agissant essentiellement en direction de la hauteur du véhicule.
